# EUROPÄISCHE PATENTANMELDUNG

(11) **EP 1 252 806 A2**
(43) Veröffentlichungstag der Anmeldung: **30.10.2002**
(21) Anmeldenummer: 02008547.8
(22) Anmeldetag: 16.04.2002
(51) Int. Cl.: A01B 69/00

(54) **Anbauschnittstelle zwischen Arbeitsfahrzeug und Arbeitsgeräten sowie Steuereinrichtung**

(30) Priorität: 27.04.2001 DE 10120732
(71) Anmelder: DEERE & COMPANY, Moline, Illinois 61265-8098 (US)
(72) Erfinder: Weiss, Heinz, 64625 Bensheim (DE); Bernhardt, Gerd, Prof. Dr., 01728 Bannewitz/Hänichen (DE); Fedotov, Sergiy, 01069 Dresden (DE); Rudik, Ruslan, 01069 Dresden (DE)
(74) Vertreter: Lau-Loskill, Philipp, Dipl.-Phys.

(57) **Zusammenfassung**

Es wird eine Anbauschnittstelle zur Kopplung eines Arbeitsgerätes (22) an ein Arbeitsfahrzeug beschrieben, welches eine fahrzeugseitige Anbauvorrichtung (16), die wenigstens ein längenverstellbares Koppelelement aufweist, und ein mit der Anbauvorrichtung (16) koppelbares geräteseitiges Koppelgetriebe (30) aufweist. Um bei unterschiedlichen Arbeitsgeräten auf einfache Weise den Zugpunkt (P), die Arbeitsbreite und den Neigungswinkel des Arbeitsgerätes (22) automatisch auf vorgebbare Anforderungen einstellen zu können, ohne dass jedes der Arbeitsgeräte über eigene Steuerungssysteme verfügt, wird vorgeschlagen, dass das Koppelgetriebe (30) frei verschwenkbar ist und dass eine Steuereinrichtung vorgesehen ist, die Steuersignale zur Längenverstellung an wenigstens ein Koppelelement abgibt, sodass die Richtung der Wirkungslinie (L) des resultierenden Bodenwiderstandes, die Lage des durch das Koppelgetriebe (30) definierten Zugpunktes (P) und der Neigungswinkel zwischen Arbeitsfahrzeug und Arbeitsgerät (22) automatisch in vorgebbarer Weise eingestellt werden.

Die Erfindung bezieht sich des weiteren auf eine Steuereinrichtung, die der Ansteuerung einer derartigen Anbauvorrichtung dient und eine Sensorik (41, 44, 54, 58) enthält, welche die relative Lage des Fahrzeugrumpfs (14) einerseits und des Arbeitsgerätrahmens (24) andererseits zu einem Kopplungsbezugssystem erfasst und/oder welche die Kräfte in den längenverstellbaren Koppelelementen (56) erfasst. Des weiteren sind Steuerungsmittel (52, 60) vorgesehen, welche Steuersignale ausgeben, um die Länge wenigstens eines längenverstellbaren Koppelelementes (56) in Abhängigkeit der Sensorsignale automatisch zu beeinflussen.

## Beschreibung

Die Erfindung betrifft eine Anbauschnittstelle zur Kopplung eines Arbeitsgerätes an ein Arbeitsfahrzeug mit einer fahrzeugseitigen Anbauvorrichtung, die wenigstens ein längenverstellbares Koppelelement aufweist, und mit einem mit der Anbauvorrichtung koppelbaren geräteseitigen Koppelgetriebe. Die Erfindung bezieht sich des weiteren auf eine Steuereinrichtung, die der Ansteuerung einer derartigen Anbauvorrichtung dient. Bei dem Arbeitsfahrzeug handelt es sich vorzugsweise um ein landwirtschaftliches Arbeitsfahrzeug, beispielsweise um einen Traktor, und als Arbeitsgerät kommt beispielsweise ein an das Arbeitsfahrzeug angelenkter Pflug in Betracht. Die Erfindung kann jedoch auch bei anderen Kombinationen von Arbeitsfahrzeugen und Anbaugeräten Verwendung finden.

Die Zugkraft zwischen Arbeitsfahrzeug und Arbeitsgerät kann insbesondere von der seitlichen Ausrichtung des Arbeitsgerätes zum Arbeitsfahrzeug abhängen. Von August van der Beek: "Die Lage des ideellen Führungspunktes und der Zugkraftbedarf beim Pflügen", Grundlagen der Landtechnik (1983) Nr. 1, S. 10-13, wurde ein System, bestehend aus einem Ackerschlepper mit über ein Dreipunktgestänge angelenktem Pflug untersucht, bei dem der Pflug eine Verstellvorrichtung aufweist, die es gestattet, die Lage des Dreipunktgestänges zu beeinflussen und damit die Lage des ideellen Führungspunktes (Zugpunkt) zu bestimmen. Der ideelle Führungspunkt ergibt sich in diesem Fall durch den Schnittpunkt der Verlängerung der beiden frei ausschwenkbaren Unterlenker und ist für die Wirkungsrichtung der resultierenden Kräfte zwischen Traktor und Pflug von entscheidender Bedeutung. Die hierbei zu berücksichtigenden Einflussgrößen des Traktors sind u. a. durch Spurweite, Reifenbreite, Radstand, Vorderachslast sowie Zahl der angetriebenen Räder und die Einflussgrößen des Pfluges, insbesondere durch die Anzahl sowie Form der Körper und deren Arbeitsbreite gegeben. Es wurde gefunden, dass sich die Zugkraft eines an einen Traktor angelenkten Pfluges minimieren lässt, wenn der ideelle Führungspunkt zur Furchenseite verlagert wird.

Für die Einstellung des Zugpunktes werden üblicherweise die Kopplungspunkte des Pfluges relativ zu seinem Rahmen mittels eines am Pflug montierten Koppelgetriebes seitlich bewegt. Für die Realisierung der seitlichen Bewegung der Kopplungspunkte werden Verstellspindeln (DE-A-31 07 137) oder Hydrozylinder (DE-A-196 39 573) eingesetzt.

Aus der DE-A-196 39 573 geht ein Traktor mit über ein übliches Dreipunktgestänge angelenktem Pflug hervor, bei dem mit Hilfe eines Vergleichs der Unterlenkerkräfte eine optimale Einstellung des Pfluges erzielbar sein soll. Zu diesem Zweck werden die Unterlenkerkräfte durch zugehörige Kraftmessbolzen getrennt gemessen. Das Verhältnis der Unterlenkerkräfte dient als Regelgröße, welche mit einem durch die Bedienungsperson vorgebbaren Sollwert verglichen wird. Anhand der so gebildeten Regelabweichung wird ein doppelt wirkender Hydrozylinder angesteuert, der Teil einer Verstelleinrichtung des Pfluges ist und durch den sich die Lage des Pfluges und damit auch des Dreipunktgestänges verändern lässt, um die Lage des ideellen Führungspunktes für die Wirkungsrichtung der resultierenden Kräfte zwischen Traktor und Pflug einstellen zu können.

Durch den Einsatz von hydraulischen Zylindern lassen sich hierbei die Vorderfurchenbreite und der Zugpunkt einstellen. Dabei wird aber vorausgesetzt, dass der Pflug über ein eigenes Steuerungs- bzw. Regelungssystem verfügt. Will ein Anwender in Verbindung mit einem Arbeitsfahrzeug mehrere Arbeitsgeräte verwenden, so muss er in mehrere Steuerungssysteme investieren, was kostspielig ist. Durch unterschiedliche Ausbildungen dieser Steuerungssysteme steigen die Anforderungen an die Bedienung.

Die der Erfindung zugrunde liegende Aufgabe wird darin gesehen, eine Anbauschnittstelle der eingangs genannten Art sowie eine hierfür geeignete Steuereinrichtung anzugeben, durch welche die vorgenannten Probleme überwunden werden. Insbesondere soll es möglich sein, auf einfache Weise bei unterschiedlichen Arbeitsgeräten den Zugpunkt und die Wirkungslinie des resultierenden Bodenwiderstandes und/oder die Arbeitsbreite und den Neigungswinkel des Arbeitsgerätes automatisch auf vorgebbare Anforderungen einzustellen, ohne dass jedes der Arbeitsgeräte über eigene Steuerungssysteme verfügt.

Die Aufgabe wird erfindungsgemäß durch die Lehre des Patentanspruchs 1 oder 17 gelöst. Weitere vorteilhafte Ausgestaltungen und Weiterbildungen der Erfindung gehen aus den Unteransprüchen hervor.

Die erfindungsgemäße Anbauschnittstelle dient der Kopplung eines Arbeitsgerätes an ein selbstfahrendes Arbeitsfahrzeug, wobei das Arbeitsfahrzeug eine Anbauvorrichtung mit wenigstens einem längenverstellbaren Koppelelement und das Arbeitsgerät ein Koppelgetriebe enthält, durch welches das Arbeitsgerät an die Anbauvorrichtung koppelbar ist. Das Koppelgetriebe ermöglicht ein freies (nicht angesteuertes) Verschwenken des Arbeitsgerätes relativ zum Arbeitsfahrzeug, sodass sich das Arbeitsgerät entsprechend der auftretenden Kräfte seitlich einstellen kann. Des weiteren ist eine Steuereinrichtung vorgesehen, die Steuersignale zur Längenverstellung an wenigstens ein Koppelelement abgibt, um die Richtung der Wirkungslinie des relativen Bodenwiderstandes und/oder die Lage des durch das Koppelgetriebe definierten Zugpunktes und/oder den Neigungswinkel zwischen Arbeitsfahrzeug und Arbeitsgerät automatisch in vorgebbarer Weise unmittelbar oder mittelbar zu beeinflussen und einzustellen.

Im Unterschied zum Stand der Technik wird das Koppelgetriebe des Arbeitsgerätes nicht eingestellt oder angesteuert, sondern ist insbesondere in der horizontalen Ebene innerhalb bestimmter Grenzen frei verschwenkbar. Die Einstellung der relativen Lage zwischen Arbeitsgerät und Arbeitsfahrzeug erfolgt erfindungsgemäß durch eine Beeinflussung der am Arbeitsfahrzeug angelenkten Anbauvorrichtung. Damit ist es nicht erforderlich, jedes verwendete Arbeitsgerät mit eigener Einstelleinrichtung und mit eigenen Steuerungskomponenten auszustatten. Vielmehr ist lediglich eine Steuereinrichtung erforderlich, die dem Arbeitsfahrzeug zugeordnet und vom Fahrzeugstand aus bedienbar ist. Dies bringt Kostenvorteile mit sich und erleichtert die Bedienung, weil nicht die Bedienung unterschiedlicher Steuerungen erlernt werden muss.

Durch die erfindungsgemäße Anbauvorrichtung lässt sich der Zugpunkt automatisch einstellen, um die Richtung der Wirkungslinie des resultierenden Bodenwiderstandes an die gewünschten Erfordernisse anzupassen. Dadurch können eine verbesserte Kraftübertragung auf den Boden erreicht und die Reibungskräfte zwischen Pflug und Boden erheblich verringert werden. Dabei können Energieeinsparungen von bis zu 15% realisiert werden. Andererseits kann das Drehmoment um die Hochachse, d. h. die vertikale Drehachse, des Arbeitsfahrzeugs verringert werden, sodass der Fahrer vom häufigen Gegenlenken entlastet wird.

Die Anbauvorrichtung kann beispielsweise Unterlenker enthalten, an denen Verstellglieder, beispielsweise Hydraulikzylinder, seitlich angreifen, wie es die EP-A-1 084 602 zeigt. Die Verstellglieder werden erfindungsgemäß angesteuert, um sie gezielt gegenüber dem Fahrzeugrumpf in seitlicher Richtung auszulenken.

Eine besonders bevorzugte Ausgestaltung der Erfindung sieht jedoch vor, dass die Anbauvorrichtung sechs nach Art eines Hexapod angeordnete längenverstellbare Koppelelemente aufweist. Eine derartige Anbauvorrichtung wurde in der nachveröffentlichten deutschen Patentanmeldung P 199 51 840.8 näher beschrieben. Um Wiederholungen zu vermeiden wird auf die Offenbarung dieser Patentanmeldung ausdrücklich Bezug genommen.

Die Koppelebene des Hexapoden, die ein Kopplungsbezugssystem definiert, lässt sich innerhalb eines gegebenen Arbeitsbereichs relativ zum Arbeitsfahrzeug beliebig im Raum, insbesondere in der horizontalen Ebene, aktiv bewegen und ansteuern. Die arbeitsgeräteseitige Koppelebene ist hingegen über das Koppelgetriebe relativ zum Arbeitsgeräterahmen seitlich frei beweglich.

Vorzugsweise sind Sensoren zur Längenmessung der längenverstellbaren Koppelelemente vorgesehen. Aus den Längenmesssignalen lassen sich Rückschlüsse auf die aktuelle räumliche Lage der Koppelebene ziehen und die Koordinaten der Koppelpunkte der Anbauvorrichtung relativ zum Arbeitsfahrzeug berechnen. Die Längenmesssignale werden durch die Steuereinheit als Längenistwerte berücksichtigt.

Es ist auch zweckmäßig, durch Kraftsensoren und/oder Drucksensoren die Zugkräfte bzw. Druckkräfte in den Koppelelementen zu erfassen, um hieraus die Größe und die Richtung der Wirkungslinie des resultierenden Bodenwiderstandes und/oder die Zugkraft und das Drehmoment um die Hochachse des Arbeitsfahrzeuges zu ermitteln.

Vorzugsweise befinden sich auf einem Koppelrahmen, der über mehrere Koppelelemente mit dem Fahrzeugrumpf in Verbindung steht, Kopplungspunkte, an denen eine Verbindung zwischen dem Arbeitsfahrzeug und einem Arbeitsgerät hergestellt werden kann. An diesen Koppelpunkten ist ein geräteseitiger Kopplungsträger montierbar, der über das Koppelgetriebe mit dem Geräterahmen verbunden ist. Durch die Anordnung der Koppelpunkte auf einem Koppelrahmen stehen die Kopplungspunkte in einer festen räumlichen Zuordnung zueinander und ermöglichen ein einfaches und rasches Koppeln.

Mit einer als Hexapod ausgebildeten fahrzeugseitigen Anbauvorrichtung lässt sich das Anbaugerät translatorisch in Fahrzeuglängsrichtung sowie nach oben und zu beiden Seiten bewegen. Es ist auch möglich, das Anbaugerät um die Fahrzeuglängsachse zu verdrehen beziehungsweise um eine horizontale oder vertikale Achse zu verschwenken. Die jeweilige räumliche Ausrichtung lässt sich aus den Längen der Koppelelemente berechnen. Die Drehung um die Fahrzeuglängsachse ist jedoch begrenzt und erlaubt es beispielsweise nicht eine volle Drehung eines Drehpfluges auszuführen. Es ist daher von Vorteil, einen Drehmechanismus zwischen dem Koppelrahmen der Anbauvorrichtung und dem Kopplungsträger des Anbaugerätes vorzusehen, der eine Drehung des Anbaugerätes um eine im wesentlichen in Fahrzeuglängsrichtung verlaufende Achse erlaubt. Hierbei ist es zweckmäßig eine Neigungssensorik zu verwenden, welche die relative Neigung (Drehwinkellage des Drehmechanismus) zwischen dem Geräterahmen und der Kopplungsstelle, insbesondere zwischen dem Kopplungsträger und dem Koppelrahmen, erfasst.

Beim Einziehen eines Pfluges in den Boden kann es vorkommen, dass der Pflug nicht sofort die richtige Vorderfurchenbreite schneidet oder dass er während der Arbeit durch ein Hindernis, beispielsweise durch einen Stein oder eine Wurzel, aus seiner Normallage gedrängt wird. Deshalb wurde die Kinematik des Krafthebers bisher so ausgelegt, dass nach Abweichung des Pfluges aus der Normallage eine schnelle Rückstellung erfolgt. Als Kriterium für eine schnelle Rückstellung des Pfluges in Normallage diente die Konvergenz der Unterlenker des Krafthebers. Je stärker die Konvergenz der Unterlenker wird, umso kürzer wird der ideelle Grindel und umso schneller erfolgt die Rückstellbewegung des Pfluges bei seitlicher Auslenkung. Dabei ist für die obere Grenze der Konvergenz die zulässige Größe der Anlagenkraft, für die untere Grenze dagegen die Forderung nach einer schnellen Einzugs- bzw. Rückstellbewegung maßgebend. In DIN ISO 730-1 sind Empfehlungen für die Auswahl der horizontalen Konvergenzabstände dargestellt.

Gemäß der vorliegenden Erfindung sind die Koppelelemente der Anbauvorrichtung jedoch bei einer automatischen Einstellung des Zugpunktes nicht frei beweglich, so dass sich deren Konvergenz nicht auf die Rückstellbewegung auswirkt. Hier ist es von Vorteil, die Kinematik des Kopplungsgetriebes so auszulegen, dass es den Anforderungen an die Konvergenz der Unterlenker des Krafthebers entspricht.

Eine bevorzugte Weiterbildung der Erfindung sieht daher vor, dass das Koppelgetriebe des Arbeitsgerätes wenigstens zwei, vorzugsweise in einer horizontalen Ebene, nebeneinander angeordnete Zuganker enthält. Bei den Zugankern kann es sich um starre Lenker handeln, die nach Art eines Viergelenks jeweils einerseits an dem Arbeitsgeräterahmen und andererseits an der Koppelstelle, insbesondere dem Kopplungsträger, angelenkt sind. Die Gelenkachsen sind zweckmäßigerweise im wesentlichen senkrecht ausgerichtet. Vorzugsweise weisen die Zuganker eine Konvergenz in einer im wesentlichen horizontalen Ebene auf. Sie schließen einen Winkel miteinander ein und laufen in Richtung des Arbeitsfahrzeuges konvergent aufeinander zu. Der Schnittpunkt der Verlängerung der beiden Zugankerachsen bilden bei der erfindungsgemäßen Anbauschnittstelle den ideellen Führungspunkt oder Zugpunkt.

Bei einer seitlichen Verschiebung der Anbauvorrichtung verdreht sich der Kopplungsträger abhängig von der Konvergenz der Zuganker etwas um eine vertikale Achse. Die Steuereinrichtung steuert die Anbauvorrichtung, insbesondere den Hexapod, so an, dass der Koppelrahmen eine Verdrehung um eine vertikale Achse ausführt, die von dem Ausmaß der seitlichen Verschiebung abhängt und der Verdrehung des Kopplungsträgers entspricht. Die Bewegungsmöglichkeiten seitens des Arbeitsfahrzeuges und seitens des Arbeitsgerätes ermöglichen es somit, die Kopplungspunkte der beiden Maschinen in der horizontalen Ebene zu verschieben ohne dass sich die relative Lage zwischen der Arbeitsmaschine und dem Anbaugerät ändert.

Durch eine solche Verschiebung der Kopplungspunkte lässt sich auch der Führungs- oder Zugpunkt in seitlicher Richtung verschieben. Bei Verwendung eines Pfluges kann beispielsweise der Zugpunkt zur Furchenseite hin verlagert werden, sodass die auf die Anlagen des Pfluges wirkenden Seitenkräfte durch das Arbeitsfahrzeug aufgenommen werden. Mit zunehmender Verlagerung des Zugpunktes zur Furchenseite hin werden die auf die Anlagen des Pfluges wirkenden Seitenkräfte geringer. Wenn dabei die Wirkungslinie des resultierenden Bodenwiderstandes nicht durch die Hochachse des Arbeitsfahrzeugs verläuft, entsteht ein Drehmoment um die Hochachse. Das Drehmoment nimmt mit der Abweichung der Wirkungslinie von der Hochachse zu. Allerdings muss mit der Zunahme des Drehmoments die Bedienungsperson zunehmend gegenlenken, um den Traktor gerade durch die Furche zu fahren. Hieraus wird deutlich, dass durch die Verlagerung des Zugpunktes von der Hochachse des Fahrzeuges zur Furchenseite die Reibungskräfte geringer werden und das Drehmoment ansteigt. Die Hochachse kann bei einem Fahrzeug mit reinem Hinterradantrieb ohne Differentialsperre durch die Mitte der Hinterachse verlaufen.

Um die relative Lage zwischen Arbeitsgerät und Pflug bestimmen zu können, ist es von besonderem Vorteil, neben der Erfassung der Längen der Koppelelemente die Ausrichtung des Arbeitsgerätes bezüglich der Koppelstelle, insbesondere bezüglich der Koppelebene oder eines Kopplungsträgers, zu erfassen. Hierfür wird eine Auslenksensorik verwendet, die zweckmäßiger Weise wenigstens einen Auslenkwinkelgeber aufweist, welcher im Bereich eines Drehgelenks des Koppelgetriebes angeordnet sein kann.

Die Erfindung entfaltet ihre besonderen Vorzüge beim Arbeitsbetrieb, bei dem sich die Richtung der Wirkungslinie des resultierenden Bodenwiderstandes und/oder die Lage des durch das Koppelgetriebe definierten Zugpunktes und/oder der Neigungswinkel zwischen Arbeitsfahrzeug und Arbeitsgerät automatisch an die Erfordernisse anpassen lässt. Bei Transportfahrt kann es jedoch störend oder sogar gefährlich sein, wenn sich das Arbeitsgerät wegen des frei beweglichen Koppelgetriebes in unkontrollierter Weise verschieben bzw. verdrehen lässt. Es ist daher von besonderem Vorteil Verriegelungsmittel vorzusehen, durch die das Koppelgetriebe wahlweise an einer seitlichen Auslenkung und/oder einer Neigung, insbesondere einer Verdrehung um die Fahrzeuglängsachse, gehindert wird.

Zweckmäßigerweise enthalten die Verriegelungsmittel wenigstens ein längenvariables Element, das einerseits an dem Geräterahmen und andererseits an der Kopplungsstelle, insbesondere dem Kopplungsträger, angelenkt ist und dessen jeweilige Länge festsetzbar ist. Bei dem längenverstellbaren Element handelt es sich beispielsweise um einen Hydraulikzylinder, dessen Zu- und Abflusskanäle der Zylinderräume durch ein Absperrventil blockierbar sind.

Die erfindungsgemäße Steuereinrichtung ist zur Einstellung einer Anbauschnittstelle, wie sie vorstehend näher beschrieben wurde, vorgesehen. Sie enthält eine Sensorik, welche die relative Lage des Fahrzeugrumpf (Fahrzeugchassis, Fahrzeugrahmen, oder ein anderer fahrzeugfester Bezugspunkt) einerseits und des Arbeitsgerätrahmens andererseits zu einem Kopplungsbezugssystems erfasst. Das Kopplungsbezugssystem wird beispielsweise durch Koppel- oder Befestigungspunkte definiert. Es kann jedoch auch durch frei wählbare räumliche Parameter, die im Bereich der Befestigungsebene liegen, festgelegt sein. Alternativ oder ergänzend zur Lageerfassung kann die Sensorik auch die Kräfte in den längenverstellbaren Koppelelementen erfassen. Die Steuereinrichtung enthält des weiteren Steuerungsmittel, welche Steuersignale ausgeben, um die Länge wenigstens eines längenverstellbaren Koppelelementes in Abhängigkeit der Sensorsignale automatisch zu beeinflussen.

Vorzugsweise erzeugen die Steuerungsmittel anhand der Sensorsignale und der Fahrzeug- und Gerätekonfiguration Steuersignale, durch welche die Richtung der Wirkungslinie des resultierenden Bodenwiderstandes und/oder die Lage des durch das Koppelgetriebe definierten Zugpunktes und/oder die Vorderfurchenbreite und/oder der Neigungswinkel zwischen Arbeitsfahrzeug und Arbeitsgerät automatisch in vorgebbarer Weise unmittelbar oder mittelbar eingestellt werden. Hierdurch lässt sich die Vorderfurchenbreite automatisch ändern, eine automatische Verstellung des Neigungswinkels vornehmen und/oder der Zugpunkt quer zur Fahrtrichtung automatisch einstellen.

Es ist zweckmäßig, zur Erfassung der relativen Lage zwischen dem Arbeitsfahrzeug und dem Kopplungsbezugssystem Sensoren vorzusehen, welche die Länge der Koppelelemente erfassen. Aus diesen Messwerten lassen sich anhand bekannter Algorithmen die Koordinaten des Kopplungsbezugssystems relativ zum Fahrzeugrumpf berechnen (Hebsacker, M.: Die Auslegung der Kinematik des Hexaglide-Methodik für die Auslegung paralleler Werkzeugmaschinen, VDI Berichte NR. 1427, 1998, S.54-55).

Des weiteren ist es von Vorteil eine Sensorik zur Erfassung des Neigungswinkels des Geräterahmens relativ zum Kopplungsbezugssystem vorzusehen. Durch die Steuerungsmittel erfolgt in Abhängigkeit der jeweiligen Neigungswinkelwerte eine Längenverstellung der Koppelelemente, derart dass die Drehausrichtung des Geräterahmens relativ zum Fahrzeug bezüglich einer Fahrzeuglängsachse automatisch eingestellt wird.

Von besonderem Vorteil ist es, eine Auslenksensorik vorzusehen, welche die Lage des Geräterahmens relativ zum Kopplungsbezugssystem erfasst. In Abhängigkeit der Lageistwerte erfolgt eine Längenverstellung der Koppelelemente in der Weise, dass sich der Zugpunkt während eines Arbeitsprozesses automatisch verlagert, ohne dass sich die relative Lage zwischen dem Arbeitsgerät und dem Arbeitsfahrzeug ändert.

Bei einer bevorzugten Steuereinrichtung geben die Steuerungsmittel in Abhängigkeit von Arbeits- und Fahrbedingungen Steuersignale an Verriegelungsmittel des Koppelgetriebes ab, um das Koppelgetriebe automatisch freizugeben oder zu sperren. Beispielsweise wird während eines Feldeinsatzes die Verriegelung aufgehoben, sodass das Koppelgetriebe frei auslenken kann, während beim Transportbetrieb das Koppelgetriebe starr gestellt wird.

Es kann auch zweckmäßig sein, eine Sensorik vorzusehen, welche die Kräfte bzw. Drücke in den Koppelelementen erfasst. Aus den Sensorsignalen ermitteln die Steuerungsmittel die Größe und die Richtung der Wirkungslinie des resultierenden Bodenwiderstandes und/oder die Zugkraft und das Drehmoment um die Fahrzeughochachse, um diese bei der Regelung als Istwerte zu verwenden.

Vorzugsweise enthält die erfindungsgemäße Steuereinrichtung wenigstens eine Eingabevorrichtung, durch welche die Bedienungsperson einen Sollwert für die Richtung der Wirkungslinie des resultierenden Bodenwiderstandes und/oder für die Lage des durch das Koppelgetriebe definierten Zugpunktes und/oder für die Vorderfurchenbreite und/oder für den Neigungswinkel zwischen Arbeitsfahrzeug und Arbeitsgerät vorgeben kann. Die Eingabevorrichtung kann ein in der Fahrzeugkabine angeordnetes Bedienungselement sein, bei dem die Auslenkung durch ein Drehpotentiometer oder ein Schiebepotentiometer erfasst wird.

Gemäß einer bevorzugten Weiterbildung der Erfindung ist eine von Hand bedienbare Eingabevorrichtung vorgesehen, durch welche die Funktion der automatischen Längeneinstellung der Koppelelemente aktivierbar und deaktivierbar ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Aufsicht auf eine Fahrzeughinterachse und einen Pflug, welche über eine erfindungsgemäße Anbauschnittstelle miteinander gekoppelt sind,
- Fig. 2: eine der Fig. 1 entsprechende Ansicht, bei der die Fahrzeughinterachse und der Pflug die gleiche relative Lage zueinander einnehmen, die Anbauschnittstelle jedoch gegenüber der in Fig. 1 gezeigten verschoben ist, und
- Fig. 3: ein Blockdiagramm anhand dessen die Funktionsweise der erfindungsgemäßen Steuereinrichtung beschrieben wird.

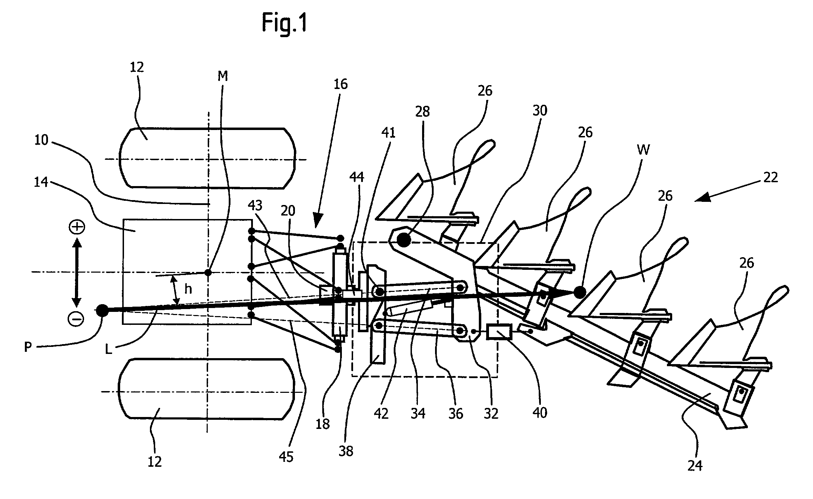

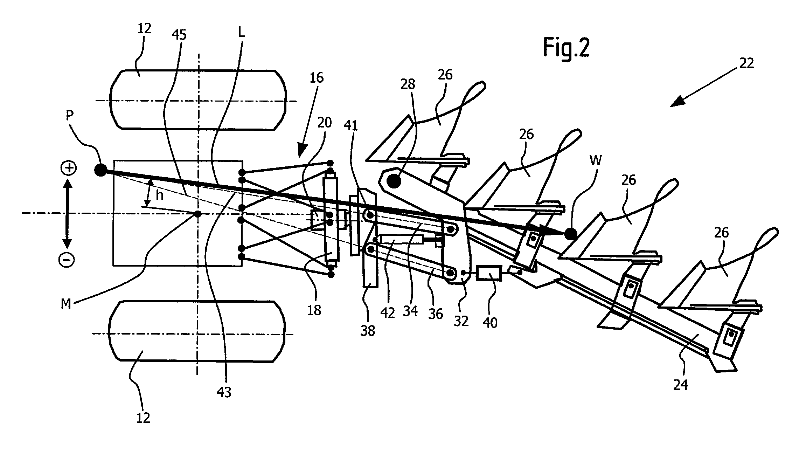

Auf der linken Seite der Figuren 1 und 2 ist eine Fahrzeughinterachse 10 mit zwei Rädern 12 eines nicht näher dargestellten Arbeitsfahrzeuges, beispielsweise eines Ackerschleppers oder Traktors, angedeutet. Zwischen den Rädern 12 befindet sich eine Getriebeeinheit mit einem Differentialgetriebegehäuse 14, welches als Fahrzeugrumpf angesehen werden kann. Das Arbeitsfahrzeug soll lediglich über die Hinterräder angetrieben werden. Sofern keine Differentialsperre eingelegt ist, verläuft die Hochachse des Fahrzeugs durch die Mitte M der Hinterachse.

An der Heckseite des Fahrzeugrumpfs 14 befindet sich eine Anbauvorrichtung 16, welche sechs nach Art eines Hexapoden angeordnete längenverstellbare Koppelelemente enthält. Bei den Koppelelementen handelt es sich beispielsweise um doppelseitig wirkende Hydraulikzylinder oder um elektromechanische Verstellelemente.

Die Koppelelemente dienen als Verbindungselemente und sind mit ihren ersten Enden jeweils paarweise in den Ecken eines Dreiecks an dem Fahrzeugrumpf 14 angelenkt. Die anderen Enden der Koppelelemente sind an einem Koppelrahmen 18 angelenkt und zwar ebenfalls paarweise in den Ecken eines Dreiecks, welches jedoch gegenüber dem Fahrzeugrumpfdreieck um 180° verdreht ist. Eine derartige Koppelelementanordnung wurde im einzelnen in der nachveröffentlichten deutschen Patentanmeldung P 199 51 840.8 beschrieben auf deren Offenbarung hiermit Bezug genommen wird. Der Koppelrahmen 18 trägt in seinem mittleren Bereich einen Drehmechanismus 20.

Auf der rechten Seite der Figuren 1 und 2 ist ein Drehpflug 22 dargestellt, bei dem an einem Rahmen 24 vier Paare von Pflugkörpern 26 befestigt sind. An dem Rahmen 24 ist mittels einer im wesentlichen vertikal ausgerichteten Gelenkstelle 28 ein Koppelgetriebe 30 befestigt. Das Koppelgetriebe 30 besteht im wesentlichen aus einem Schwenkarm 32, zwei Zugankern 34, 36 und einem Kopplungsträger 38. Der Schwenkarm 32 steht über die Gelenkstelle 28 mit dem Rahmen 24 in Verbindung und lässt sich mit einem Hydraulikzylinder 40 relativ zum Rahmen 24 verschwenken. Durch ein solches Verschwenken lässt sich die Schnittbreite des Pfluges 22 einstellen. In die Gelenkstelle 28 ist ein Drehwinkelgeber integriert. Der Hydraulikzylinder 40 wird unter Verwendung der Drehwinkelgebersignale angesteuert oder er ist in eine Regelung eingebunden, sodass sich eine vorgebbare Schnittbreite einstellen und/oder einhalten lässt.

Bei den beiden Zugankern 34, 36 handelt es sich um starre Lenker, die mit einem Ende an dem Schwenkarm 32 und mit dem anderen Ende an dem Kopplungsträger 38 gelenkig befestigt sind. Zur Verbesserung der Stabilität können auch zwei Zugankerpaare verwendet werden mit jeweils zwei übereinander liegenden Zugankern. Die Gelenkachsen der Zuganker 34, 36 sind im wesentlichen vertikal ausgerichtet, so dass die Zuganker 34, 36 in einer horizontalen Ebene auslenken können. Im Bereich wenigstens einer der Gelenkachsen ist ein Drehwinkelgeber 41 angeordnet, der die Auslenkung des Koppelgetriebes 30 erfasst. Die beiden Zuganker 34, 36 sind nicht parallel zueinander ausgerichtet sondern laufen in Richtung des Arbeitsfahrzeuges konvergent aufeinander zu. Der Schnittpunkt der beiden Zugankerachsen 43, 45 bildet den ideellen Führungspunkt P oder Zugpunkt.

Zwischen dem Schwenkarm 32 und dem Kopplungsträger 38 ist des weiteren ein Verriegelungselement 42 angeordnet. Die Ausrichtung des Verriegelungselementes 42 schließt mit den Richtungen der beiden Zuganker 36, 38 jeweils einen Winkel ein. In seiner entriegelten Stellung passt sich die Länge des Verriegelungselementes 42 den Gegebenheiten beim Verschwenken des Koppelgetriebes 30 an. Die Länge des Verriegelungselementes 42 lässt sich jedoch festsetzen, so dass es die Zuganker 34, 36 verspannt und keine Relativbewegung zwischen dem Kopplungsträger 38 und dem Schwenkarm 32 zulässt. Im verriegelten Zustand ist das Koppelgetriebe 30 starr und kann sich nicht auf die jeweiligen Kraftverhältnisse einstellen. Bei dem Verriegelungselement 42 handelt es sich beispielsweise um einen hydraulischen Sperrzylinder, dessen Hydraulikkammern über eine nicht näher dargestellte Ventilanordnung mit einem Vorratsbehälter verbunden sind. Wird die Ventilanordnung geschlossen, ist ein Flüssigkeitsaustausch zwischen den Hydraulikkammern und dem Vorratsbehälter nicht möglich. Der Sperrzylinder 42 ist dann starr und seine Länge ist durch äußere Kräfte nicht veränderbar.

Der Kopplungsträger 38 steht über den Drehmechanismus 20 mit dem Koppelrahmen 18 der Anbauvorrichtung 16 in Verbindung. Der Drehmechanismus 20 ermöglicht es, dass sich der Drehpflug 22 im wesentlichen um die Fahrzeuglängsachse von einer ersten Arbeitsstellung in eine zweite Arbeitsstellung verdrehen lässt. Die Drehlage wird durch einen Drehwinkelsensor 44 oder Neigungswinkelgeber erfasst. Der Drehmechanismus 20 enthält einen nicht näher dargestellten Antrieb, durch den sich der Drehpflug 22 zwischen den Arbeitsstellungen verdrehen lässt. Der Antrieb ermöglicht auch eine Drehwinkeleinstellung, um die Neigung des Pfluges gegenüber dem Arbeitsfahrzeug auf einen gewünschten Wert einzustellen.

Die Verbindungslinie zwischen dem Angriffspunkt W der Gesamtwiderstandskraft des Pfluges 22 einerseits und dem ideellen Führungspunkt P andererseits bildet die Wirkungslinie L des resultierenden Bodenwiderstandes. Die vorliegende Erfindung erlaubt es, lediglich durch Einstellung der fahrzeugseitigen Anbauvorrichtung 16 die Richtung der Wirkungslinie L zu verändern, ohne dass sich die relative Lage zwischen Arbeitsfahrzeug und Pflug 22 ändert.

Diese Änderung der Richtung der Wirkungslinie L lässt sich durch einen Vergleich der Fig. 1 mit der Fig. 2 veranschaulichen. In beiden Figuren ist die relative Lage zwischen dem Arbeitsfahrzeug und dem Pflug 22 die gleiche. Die Anbauvorrichtung 16 und das Koppelgetriebe 30 nehmen jedoch unterschiedliche Stellungen ein. Der Wechsel zwischen diesen Stellungen erfolgt durch eine entsprechende Ansteuerung der längenverstellbaren Koppelelemente der Anbauvorrichtung 16. Es ist ersichtlich, dass der in Fig. 2 dargestellte Koppelrahmen 18 gegenüber dem in Fig. 1 dargestellten Koppelrahmen 18 in Fahrtrichtung gesehen seitlich nach rechts, also zur Furchenseite (d. h. zum gepflügten Acker) hin, verschoben ist. Außerdem ist der in Fig. 2 dargestellte Koppelrahmen 18 und mit ihm der Kopplungsträger 38 gegenüber der in Fig. 1 gezeigten Ausrichtung um eine vertikale Achse leicht verdreht, und zwar derart, dass sich die Zuganker 34, 36 aufgrund der herrschenden Zugkräfte auf einen neuen gewünschten ideellen Führungspunkt P einstellen, ohne dass der Angriffspunkt W des Pfluges seine Lage ändert.

Es zeigt sich, dass für eine Veränderung der Lage des ideellen Führungspunktes lediglich die fahrzeugseitige Anbauvorrichtung angesteuert wird. Eine Ansteuerung von Pflugkomponenten, insbesondere des Koppelgetriebes 30 ist weder erforderlich, noch in dem beschriebenen Ausführungsbeispiel vorgesehen.

Mit zunehmender Verlagerung des Zugpunktes zur Furchenseite hin werden die auf die Anlagen des Pfluges 22 wirkenden Seitenkräfte geringer. Da die Wirkungslinie L des resultierenden Bodenwiderstandes dabei nicht durch die Mitte M der Hinterachse verläuft, entsteht ein Drehmoment um die Mitte M der Hinterachse, welche die Hochachse des Arbeitsfahrzeugs bildet. Dieses Drehmoment nimmt mit der Abweichung h zwischen der Wirkungslinie L und der Mitte M der Hinterachse zu. Mit Zunahme des Drehmoments um die Fahrzeughochachse muss die Bedienungsperson zunehmend gegenlenken, um das Arbeitsfahrzeug gerade durch die Furche zu fahren. Durch die Verlagerung des Zugpunktes von der Mitte M der Hinterachse zur Furchenseite werden daher die Reibungskräfte geringer während das Drehmoment ansteigt.

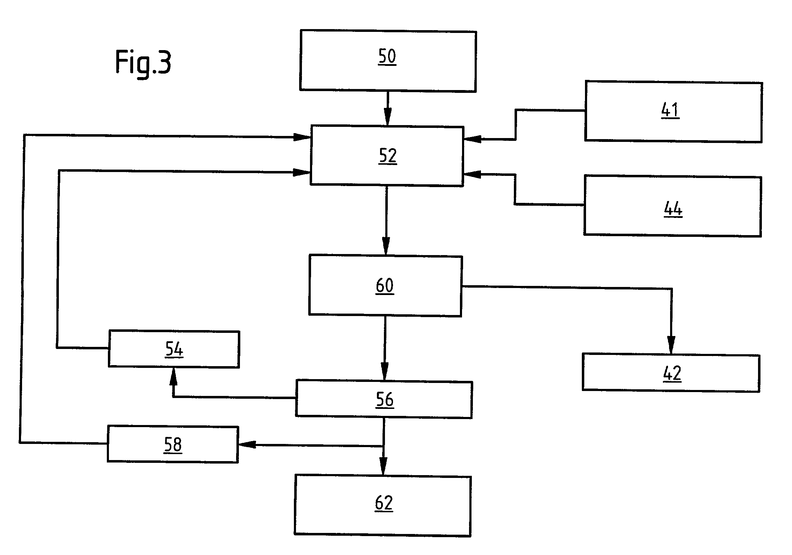

Aus dem in Fig. 3 dargestellten Blockdiagramm gehen Komponenten der erfindungsgemäßen Steuereinrichtung hervor. Es ist eine Bedienungseinheit 50 vorgesehen, die in der Fahrzeugkabine angeordnet ist und nicht näher dargestellte Bedienungselemente beispielsweise zur Sollwertvorgabe für die Lage eines ideellen Führungspunktes, für die Vorderfurchenbreite und für einen Neigungswinkel des Pfluges (Verdrehung um die Fahrzeuglängsachse) enthält. Die Bedienungseinheit 50 weist auch ein Bedienungselement auf, durch welches das Verriegelungselement 42 angesteuert wird, um das Koppelgetriebe für bestimmte Betriebsbedingungen, z. B. für Transportfahrten, starr stellen zu können.

Die Signale der Bedienungseinheit 50 werden einer elektronischen Steuereinheit 52 zugeführt. Die Steuereinheit 52 empfängt Messwertsignale des Drehwinkelgebers 41 des Koppelgetriebes 30 und des Drehwinkelgebers 44 des Drehmechanismus 20. Des weiteren empfängt die Steuereinheit 52 Signale von sechs Kraftsensoren 54, welche die in den sechs längenverstellbaren Koppelelementen 56 der Anbauvorrichtung 16 herrschenden Druck- und/oder Zugkräfte erfassen. In jedes der sechs als Hydraulikzylinder ausgebildete Koppelelemente 56 ist ein Wegsensor 58 integriert. Es kann sich hierbei beispielsweise um ein Wegstreckenmesssystem handeln, wie es in der Landtechnikzeitschrift profi, Nr. 1/01, Seite 71 beschrieben wurde. Auch die Signale dieser Wegsensoren 58 werden der Steuereinheit 52 zugeführt. Der besseren Übersichtlichkeit halber wurde von den sechs Kraftsensoren 54, den sechs längenverstellbaren Koppelelementen 56 und den sechs Längensensoren 58 in Fig. 3 jeweils nur einer dargestellt.

Die Steuereinheit 52 gibt Steuersignale an eine Proportionalventilanordnung 60 ab, welche einerseits die sechs Koppelelemente 56 der Anbauvorrichtung 16 und andererseits den Sperrzylinder 42 des Koppelgetriebes 30 ansteuert. Eine Längenänderung der Koppelelemente 56 wirkt sich auf die Lage des Kopplungsbezugssystems 62 aus, welches durch nichtgezeigte Kopplungspunkte des Koppelrahmens 18 definiert sein kann.

Die Wirkungsweise der Steuer- oder Regeleinrichtung für die erfindungsgemäße Anbauschnittstelle ist folgende:
Vor dem Beginn des Arbeitsprozesses werden von der Bedienungsperson die Sollwerte der Vorderfurchenbreite, der Arbeitstiefe, der Schnittbreite, des Neigungswinkels sowie Vorgaben für die Regelungsart eingegeben. Diese Sollwerte werden durch die Bedienungseinheit 50, durch ein Eingabeterminal und/oder durch ein oder mehrere Potentiometer eingegeben. Per Tastendruck oder durch Auslenkung eines entsprechenden Joysticks wird von der Bedienungsperson das Einsetzen des Pfluges 22 auf die vorgegebene Arbeitstiefe aktiviert.

Aus den Signalen des Drehwinkelgebers 41 des Koppelgetriebes 30 und des Neigungswinkelgebers 44 des Drehmechanismusses 20 wird durch die Steuereinheit 52 erkannt, in welcher Position sich der Pflugrahmen 24 relativ zu einem Kopplungsbezugssystem, beispielsweise zu den Kopplungspunkten zwischen dem Koppelrahmen 18 und dem Kopplungsträger 38 befindet. Aus den Signalen der Wegsensoren 58 der längenverstellbaren Koppelelemente 56 des Hexapod 16 wird die Lage des Kopplungsbezugssystems relativ zum Arbeitsfahrzeug ermittelt. Aus der ermittelten Position des Pflugrahmens 24 relativ zu dem Kopplungsbezugssystem und der Lage des Kopplungsbezugssystems relativ zum Arbeitsfahrzeug wird der Istwert für die Vorderfurchenbreite berechnet. Aus dem Sollwert-Istwert-Vergleich wird eine seitliche Verschiebung des Hexapod 16, die für die Einstellung der vorgegebenen Vorderfurchenbreite benötigt wird, berechnet und realisiert. Bei der Ausführung einer Vorderfurchenbreiten-Regelung wird das Verriegelungselement 42 vorzugsweise starr gestellt.

Aus dem Vergleich des Neigungswinkel-Sollwertes für den Pflug 22 und des durch den Neigungswinkelgeber 44 im Drehmechanismus 20 gemessenen Istwert wird die für die Einstellung des Neigungswinkels des Pfluges 22 benötigte Drehung des Hexapoden um die Fahrzeuglängsachse berechnet und durch die Hexapodsteuerung 52 realisiert.

Für die Schnittbreiteneinstellung kann der Hydraulikzylinder 40 angesteuert werden, sodass der Pflugrahmen 24 relativ zum Koppelgetriebe 30 verschwenkt wird. Für die Erfassung des Schnittbreiten-Istwertes kann ein in den Hydraulikzylinder 40 integrierter Wegsensor oder ein in der Gelenkstelle 28 des Mechanismusses für die Änderung der Schnittbreite integrierten Drehwinkelsensor eingesetzt werden. Aus dem Soll-Ist-Abgleich resultiert eine Regelabweichung, aus der die Steuereinheit 52 ein Stellsignal für die Verstellung des Hydraulikzylinders 40 berechnet und dieses an ein Hydraulikventil weiterleitet, welches die Ölmenge für die Verstellung des Hydraulikzylinders 40 einstellt. Die Schnittbreite lässt sich damit automatisch auf einen vorgegebenen Sollwert einstellen.

Nachdem die Vorderfurchenbreite, der Neigungswinkel und die Schnittbreite eingestellt wurde, wird der Pflug 22 auf die vorgegebene Arbeitstiefe eingesetzt. Während des Einsetzens des Pfluges 22 wird der vorgebbare Sollwert der Arbeitstiefe mit einem Istwert verglichen, der aus den Messsignalen der Wegsensoren 58, die die Lage des Hexapoden 16 repräsentieren, abgeleitet werden kann. Wenn der Istwert dem Sollwert entspricht wird der Sperrzylinder 42 des Koppelgetriebes 30 automatisch entriegelt. Die Bedienungsperson kann jetzt per Tastendruck eine voreingestellte Regelungsart aktivieren, um automatisch eine minimale Zugkraft bzw. Kraftstoffeinsparung (Reibungskraft-Regelung) oder um automatisch ein minimales Drehmoment um die Fahrzeughochachse (Drehmoment-Regelung) einzuhalten. Es ist auch möglich einen Mittelwert einzustellen, sodass ein Kompromiss zwischen diesen beiden Regelungsarten eingestellt wird (Mischregelung). Wenn die Bedienungsperson eine dieser Regelungsarten aktiviert hat (z.B. am Anfang des Arbeitsprozesses), wird die Regelung am Vorgewende beim Ausheben des Pfluges automatisch deaktiviert und nach dem Einsetzen des Pfluges automatisch wieder aktiviert. Die Regelung gemäß der vorliegenden Erfindung kann somit in eine HMS-Regelung (Headland Management Regelung), wie sie beispielsweise in der EP-A-0 697 303 beschrieben wurde, integriert werden.

Wenn die Reibungskraft-Regelung aktiviert ist, wird die Istlage des Pflugrahmens 24 relativ zum Kopplungsbezugssystem mittels des Drehwinkelgebers 41 des Koppelgetriebes 30 ermittelt und mit einer Solllage verglichen. Die Solllage wird von der Bedienungsperson durch ein Potentiometer oder durch ein Eingabeterminal vorgegeben. Aus dem Soll-Ist-Vergleich wird eine seitliche Verschiebung des Hexapoden berechnet und durch die Steuereinheit 52 realisiert. Durch die Änderung des Sollwertes kann die Bedienungsperson vorgeben, ob der Zugpunkt P mehr oder weniger zur Furchenseite hin verlagert wird. Um den Einfluß der Verschiebung des Zugpunktes P zur Furchenseite für die Bedienungsperson anschaulich zu machen, wird die Zugkraft auf einem Display in der Fahrzeugkabine angezeigt. Für die Ermittlung der Zugkraft werden die Drücke oder die Kräfte in den Hexapodzylindern 56 durch Kraftsensoren 54 gemessen. Aus den bekannten Kräften in den Hexapodzylindern 56 lassen sich die Kräfte in Längs-, Quer- und Vertikalrichtung sowie die Momente um die Längs-, Quer- und Hochachse des Hexapoden berechnen (Hebsacker, M.: Die Auslegung der Kinematik des Hexaglide - Methodik für die Auslegung paralleler Werkzeugmaschinen, VDI Berichte NR. 1427, 1998, S.54-55).

Durch eine derartige Regelung des Zugpunktes P wird erreicht, dass der Pflug 22 mit geringeren Reibungskräften ohne Verschlechterung der Stabilität der Pflugbewegung in der Furche gleitet. Dabei wird der Kraftstoffverbrauch verringert, gleichzeitig entstehen aber Momente um die Fahrzeughochachse, die das Fahrverhalten des Arbeitsfahrzeuges beeinträchtigen und durch Gegenlenken kompensiert werden können.

Wenn die Drehmoment-Regelung aktiviert ist, wird der Istwert des Drehmomentes um die Fahrzeughochachse aus den in den Hexapodzylindern 56 gemessenen Kräften und den Parametern der Fahrzeuggeometrie berechnet und mit einem vorgebbaren Sollwert verglichen. Als Sollwert wird ein minimales Drehmoment oder ein Null-Drehmoment um die Fahrzeughochachse angenommen. Wenn der Istwert größer als der Sollwert ist, wird der Koppelrahmen 18 des Hexapoden 16 näher zur Fahrzeuglängsachse verschoben.

Bei der Mischregelung wird eine Regelabweichung gebildet, indem einerseits ein Wert für die relative Lage des Pflugrahmens 24 zum Kopplungssystem und andererseits ein Wert, der ein Null-Drehmoment um die Fahrzeughochachse repräsentiert, herangezogen werden. Beide Werte werden in einem vorgebbaren Verhältnis, beispielsweise unter Verwendung eines durch die Bedienungsperson einstellbaren Potentiometers, miteinander kombiniert, beispielsweise "gemischt". Dieser Mischwert wird dann als Regelgröße verarbeitet. Mit der Mischregelung kann ein relativ geringer Kraftstoffverbrauch bei geringen Momenten um die Fahrzeughochachse realisiert werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Anbauschnittstelle zur Kopplung eines Arbeitsgerätes (22) an ein Arbeitsfahrzeug mit einer fahrzeugseitigen Anbauvorrichtung (16), die wenigstens ein längenverstellbares Koppelelement aufweist, und mit einem mit der Anbauvorrichtung (16) koppelbaren geräteseitigen Koppelgetriebe (30), **dadurch gekennzeichnet, dass** das Koppelgetriebe (30) frei verschwenkbar ist und dass eine Steuereinrichtung vorgesehen ist, die Steuersignale zur Längenverstellung an das wenigstens eine Koppelelement abgibt, um die Richtung der Wirkungslinie (L) des resultierenden Bodenwiderstandes und/oder die Lage des durch das Koppelgetriebe (30) definierten Zugpunktes (P) und/oder den Neigungswinkel zwischen Arbeitsfahrzeug und Arbeitsgerät (22) automatisch in vorgebbarer Weise unmittelbar oder mittelbar zu beeinflussen und einzustellen.

2. Anbauschnittstelle nach Anspruch 1, **dadurch gekennzeichnet, dass** die Anbauvorrichtung (16) sechs nach Art eines Hexapoden angeordnete längenverstellbare Koppelelemente aufweist.

3. Anbauschnittstelle nach Anspruch 1 oder 2, **dadurch gekennzeichnet, dass** Sensoren zur Längenmessung des wenigstens einen längenverstellbaren Koppelelements vorgesehen sind.

4. Anbauschnittstelle nach einem der Ansprüche 1 bis 3, **dadurch gekennzeichnet, dass** Kraftsensoren und/oder Drucksensoren zur Ermittlung der Zug- bzw. Druckkräfte in dem wenigstens einen längenverstellbaren Koppelelement vorgesehen sind.

5. Anbauschnittstelle nach einem der Ansprüche 1 bis 4, **dadurch gekennzeichnet, dass** die Anbauvorrichtung (16) einen Koppelrahmen (18) aufweist, dass mehrere Koppelelemente jeweils mit ihrem einen Ende an dem Fahrzeugrumpf (14) und mit ihrem anderen Ende an dem Koppelrahmen (18) angelenkt sind und dass an dem Koppelgetriebe (30) ein an dem Koppelrahmen (18) montierbarer Kopplungsträger (38) befestigt ist.

6. Anbauschnittstelle nach Anspruch 5, **dadurch gekennzeichnet, dass** die Verbindung zwischen Koppelrahmen (18) und Kopplungsträger (38) als Drehmechanismus (20) ausgebildet ist.

7. Anbauschnittstelle nach Anspruch 6, **dadurch gekennzeichnet, dass** eine Neigungssensorik (44) vorgesehen ist, welche die relative Neigung zwischen dem Geräterahmen (24) und der Kopplungsstelle, insbesondere dem Kopplungsträger (38) bzw. dem Koppelrahmen (18), erfasst.

8. Anbauschnittstelle nach Anspruch 7, **dadurch gekennzeichnet, dass** die Neigungssensorik wenigstens einen Neigungswinkelgeber (44) zur Erfassung der Winkellage des Drehmechanismusses (20) aufweist.

9. Anbauschnittstelle nach einem der Ansprüche 1 bis 8, **dadurch gekennzeichnet, dass** das Koppelgetriebe (30) wenigstens zwei Zuganker (34, 36) enthält, die jeweils einerseits an einem Rahmenelement (32) des Arbeitsgerätes (22) und andererseits an der Koppelstelle, insbesondere dem Kopplungsträger (38), befestigt sind.

10. Anbauschnittstelle nach Anspruch 9, **dadurch gekennzeichnet, dass** die Zuganker (34, 36) durch Drehgelenke mit ihrem einen Ende an dem Geräterahmenelement (32) und mit ihrem anderen Ende an dem Kopplungsträger (38) angelenkt sind.

11. Anbauschnittstelle nach Anspruch 9 oder 10, **dadurch gekennzeichnet, dass** die Zuganker (34, 36) derart angeordnet sind, dass sie eine Konvergenz im wesentlichen in horizontaler Ebene aufweisen.

12. Anbauschnittstelle nach einem der Ansprüche 1 bis 11, **dadurch gekennzeichnet, dass** eine Auslenksensorik (41) vorgesehen ist, welche die Auslenkung zwischen einem Geräterahmenelement (32) und der Koppelstelle, insbesondere dem Kopplungsträger (38), erfasst.

13. Anbauschnittstelle nach Anspruch 12, **dadurch gekennzeichnet, dass** die Auslenksensorik wenigstens einen im Bereich eines Drehgelenks des Koppelgetriebes (30) angeordneten Auslenkwinkelgeber (41) aufweist.

14. Anbauschnittstelle nach einem der Ansprüche 1 bis 13, **dadurch gekennzeichnet, dass** Verriegelungsmittel (42) vorgesehen sind, durch die das Koppelgetriebe (30) wahlweise an einer Auslenkung und/oder Neigung gehindert wird.

15. Anbauschnittstelle nach Anspruch 14, **dadurch gekennzeichnet, dass** die Verriegelungsmittel wenigstens ein längenvariables Element (42) enthalten, das einerseits an einem Geräterahmenelement (32) und andererseits an der Kopplungsstelle, insbesondere dem Kopplungsträger (38), angelenkt ist und dessen jeweilige Länge festsetzbar ist.

16. Anbauschnittestelle nach einem der Ansprüche 1 bis 15, **gekennzeichnet durch** eine Steuereinrichtung nach einem der Ansprüche 17 bis 25.

17. Steuereinrichtung für eine Anbauschnittstelle gemäß eines der Ansprüche 1 bis 16 **gekennzeichnet durch** eine Sensorik (41, 44, 54, 58), welche die relative Lagen des Fahrzeugrumpf (14) einerseits und des Arbeitsgerätrahmens (24) andererseits zu einem Kopplungsbezugssystem erfasst und/oder welche die Kräfte in den längenverstellbaren Koppelelementen (56) erfasst, und **durch** Steuerungsmittel (52, 60), welche Steuersignale ausgeben, um die Länge wenigstens eines längenverstellbaren Koppelelementes (56) in Abhängigkeit der Sensorsignale automatisch zu beeinflussen.

18. Steuereinrichtung nach Anspruch 17, **dadurch gekennzeichnet, dass** die Steuerungsmittel (52, 60) anhand der Sensorsignale und der Fahrzeug- und Gerätekonfiguration Steuersignale erzeugen, durch welche die Richtung der Wirkungslinie (L) des resultierenden Bodenwiderstandes und/oder die Lage des durch das Koppelgetriebe (30) definierten Zugpunktes (P) und/oder die Vorderfurchenbreite und/oder der Neigungswinkel zwischen Arbeitsfahrzeug und Arbeitsgerät (22) automatisch in vorgebbarer Weise unmittelbar oder mittelbar eingestellt werden.

19. Steuereinrichtung nach Anspruch 17 oder 18, **dadurch gekennzeichnet, dass** Sensoren (58) zur Längenmessung der längenverstellbaren Koppelelemente vorgesehen sind und dass die Koordinaten des Kopplungsbezugssystems relativ zum Fahrzeugrumpf (14) aus den Messwerten der Sensoren (58) berechnet werden.

20. Steuereinrichtung nach einem der Ansprüche 17 bis 19, **dadurch gekennzeichnet, dass** eine Sensorik (44) zur Erfassung des Neigungswinkels des Geräterahmens (24) relativ zum Kopplungsbezugssystem vorgesehen ist, und dass die Steuerungsmittel (52, 60) die Längenverstellung der Koppelelemente (56) in Abhängigkeit des Neigungswinkelwertes derart vornehmen, dass die Neigung des Geräterahmens (24) relativ zum Fahrzeugrumpf (14) automatisch eingestellt wird.

21. Steuereinrichtung nach einem der Ansprüche 17 bis 20, **dadurch gekennzeichnet, dass** eine Auslenksensorik (41) vorgesehen ist, welche die Lage des Geräterahmens (24) relativ zum Kopplungsbezugssystem erfasst und dass die Längenverstellung der Koppelelemente (56) in Abhängigkeit des Lageistwertes derart erfolgt, dass sich der Zugpunkt (P) während eines Arbeitsprozesses automatisch verlagert, ohne dass sich die relative Lage zwischen dem Arbeitsgerät (22) und dem Arbeitsfahrzeug ändert.

22. Steuereinrichtung nach einem der Ansprüche 17 bis 21, **dadurch gekennzeichnet, dass** die Steuerungsmittel (52, 60) in Abhängigkeit von Arbeits- und Fahrbedingungen Steuersignale an Verriegelungsmittel (42) des Koppelgetriebes (30) abgibt, um das Koppelgetriebe (30) automatisch freizugeben oder zu sperren.

23. Steuereinrichtung nach einem der Ansprüche 17 bis 22, **dadurch gekennzeichnet, dass** eine Sensorik (54) vorgesehen ist, welche die Kräfte bzw. Drücke in den Koppelelementen (56) erfasst, und dass die Steuerungsmittel (52, 60) aus den Sensorsignalen die Größe und die Richtung der Wirkungslinie (L) des resultierenden Bodenwiderstandes und/oder die Zugkraft und das Drehmoment um die Fahrzeughochachse ermittelt.

24. Steuereinrichtung nach einem der Ansprüche 17 bis 23, **dadurch gekennzeichnet, dass** wenigstens eine Eingabevorrichtung (50) vorgesehen ist, durch welche ein Sollwert für die Richtung der Wirkungslinie (L) des resultierenden Bodenwiderstandes und/oder für die Lage des durch das Koppelgetriebe definierten Zugpunktes (P) und/oder für die Vorderfurchenbreite und/oder für den Neigungswinkel zwischen Arbeitsfahrzeug und Arbeitsgerät (22) vorgebbar ist.

25. Steuereinrichtung nach einem der Ansprüche 17 bis 24, **dadurch gekennzeichnet, dass** wenigstens eine Aktivierungs-Eingabevorrichtung vorgesehen ist, durch welche die Funktion der automatischen Längeneinstellung der Koppelelemente (56) aktivierbar und deaktivierbar ist.
